# DEMANDE DE BREVET EUROPEEN

(11) **EP 3 823 060 A1**
(43) Date de publication de la demande: **19.05.2021**
(21) Numéro de dépôt: 20207316.9
(22) Date de dépôt: 12.11.2020
(51) Int. Cl.: H01M 4/04, H01M 4/1391, H01M 4/525, H01M 4/62, H01M 10/0585, H01M 10/0562

(54) **ELÉMENT ÉLECTRIQUEMENT CONDUCTEUR**

(30) Priorité: 14.11.2019 FR 1912695
(71) Demandeur: Commissariat à l'Energie Atomique et aux Energies Alternatives, 75015 Paris (FR)
(72) Inventeur: RODRIGUEZ, Guillaume, 38054 GRENOBLE CEDEX 9 (FR); DUBARRY, Christophe, 38054 GRENOBLE CEDEX 9 (FR); HALIMAOUI, Aomar, 38054 GRENOBLE CEDEX 9 (FR); TESSAIRE, Magali, 38054 GRENOBLE CEDEX 9 (FR)
(74) Mandataire: Decobert, Jean-Pascal

(57) **Abrégé**

L'invention concerne un dispositif microélectronique comprenant un support (1) et un élément électriquement conducteur comprenant en empilement et successivement au-dessus d'une première face du support (1), une première couche à base d'un métal et une deuxième couche, au contact de la première couche, à base d'un matériau choisi parmi le MoSiₓ et le WSi_{y}.

## Description

### DOMAINE TECHNIQUE

La présente invention concerne le domaine des éléments électriquement conducteurs pour des dispositifs microélectroniques. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).

Notamment, sont visés les dispositifs microélectroniques disposant d'électrodes, dans le domaine du stockage d'énergie par voie électrochimique, en particulier sous forme de micro-batterie (réalisant ainsi un composant de microstockage électrochimique). L'invention trouve pour application la fabrication de dispositifs microélectroniques offrant un tel stockage. Cela inclut notamment les dispositifs du type batterie, accumulateur ou condensateur utilisant un électrolyte, solide de préférence.

Sont aussi visés les dispositifs microélectroniques disposant d'électrodes dans des empilements à couche électroactive comme des couches piézoélectriques, notamment pour la réalisation de capteurs ou d'actionneurs ; il peut s'agir de dispositifs utilisant des matériaux du type céramique PZT (PbZrTiO₃).

Par ailleurs, toujours non limitativement, l'invention est aussi d'intérêt pour la réalisation de dispositifs microélectroniques comportant des circuits microélectroniques, notamment pour des portions de circuits d'émetteurs et/ou de récepteurs radiofréquences, par exemple pour former des parties de capacité ou d'induction, ou des parties de contacts électriques pour de tels circuits ; il peut s'agir de parties de filtres pour la téléphonie mobile, par exemple mettant en œuvre des matériaux présentant des coefficients de couplage élevé comme le LiNbO₃ ou le LiTaO₃.

### ÉTAT DE LA TECHNIQUE

Pour prendre le cas du stockage d'énergie électrochimique, les systèmes actuels sont, de manière générale, réalisés par des dépôts successifs sur un substrat d'un premier collecteur de courant, d'une première électrode, d'un électrolyte ou conducteur ionique, d'une deuxième électrode, et d'un deuxième collecteur de courant. Une encapsulation, par le biais de dépôt de couche supplémentaire, ou par report de capot, est souvent nécessaire pour protéger le système de la réactivité chimique avec l'oxygène et la vapeur d'eau.

Les collecteurs de courant, raccordés chacun à l'une des différentes électrodes, sont accessibles par l'extérieur de l'empilement du dispositif de stockage électrochimique, pour une reprise de contact. La première électrode (ou électrode positive utilisée dans un accumulateur au lithium ou sodium conventionnel) est potentiellement utilisable dans une microbatterie, et le plus répandu est le LiCoO₂.

Ce type de composant présente l'inconvénient d'avoir au moins une étape à fort budget thermique durant son procédé technologique. Notamment, dans le cas du LiCoO₂ évoqué précédemment pour la formation de la première électrode, on réalise généralement une oxydation thermique sous air ou sous dioxygène dont la finalité est de cristalliser le matériau de la première électrode ; fréquemment, les températures de ce traitement thermique sont comprises entre 500 et 700°C.

Cette particularité conditionne des spécifications restrictives sur le premier collecteur de courant. En effet, le collecteur de courant doit conserver ses propriétés de conduction électrique après un traitement à température élevée sous une atmosphère oxydante. De manière conventionnelle, le matériau utilisé est le platine, matériau onéreux mais capable de conserver ses propriétés de conduction électrique après le traitement thermique de par son oxydabilité quasi-nulle. Lorsque d'autres matériaux sont employés, la dégradation de l'efficacité du dispositif microélectronique est importante à cause de l'oxydation des parties conductrices induite par le traitement thermique.

D'une manière générale, former des parties de dispositifs microélectroniques présentant de bonnes propriétés de conduction électrique est toujours délicat, car les conducteurs électrique de qualité qui résistent à l'oxydation sont peu nombreux et coûteux.

Un objet de la présente invention est donc de proposer une alternative aux conducteurs d'électricité auxquels on a actuellement recours.

### RÉSUMÉ

Pour atteindre cet objectif, selon un mode de réalisation on prévoit un dispositif microélectronique, comprenant un support et un élément électriquement conducteur comprenant en empilement et successivement au-dessus d'une première face du support, une première couche à base d'un métal et une deuxième couche, au contact de la première couche, à base d'un matériau choisi parmi le MoSiₓ et le WSi_{y}

Cette association de couches de matériaux sélectionnés assure un niveau de conductivité électrique très satisfaisant, puisqu'il est facile d'atteindre moins de 3 ohms de résistance électrique. Dans le même temps, la couche à base de MoSi ou de WSi protège efficacement la couche sous-jacente, en particulier contre l'oxydation.

Une application privilégiée, mais non limitative, concerne les dispositifs impliquant des traitements thermiques en présence de dioxygène. Il n'est pas exclu qu'une fine couche d'oxyde se forme à la surface de la deuxième couche dans de tels contextes, mais son épaisseur est si faible, de par les matériaux sélectionnés, que cela n'impacte pas en pratique la conductivité de l'ensemble.

Des utilisations potentielles de l'élément électriquement conducteur sont la formation de tout ou partie d'une électrode d'un système à couche électro-active, d'un collecteur de courant, de partie de circuits notamment d'émetteur/récepteur radiofréquence.

De préférence, mais optionnellement, le MoSiₓ choisi est tel que x = 1, c'est-à-dire qu'il s'agit de MoSi. Alors que ce matériau se révèle être plus cristallin que d'autres solutions, comme le MoSi₂, qui est presque amorphe, le demandeur a obtenu des résultats surprenants, plus favorables avec le MoSi.

Un autre aspect est relatif à un procédé de fabrication d'un dispositif microélectronique comprenant un élément électriquement conducteur, le procédé comprenant une fourniture d'un support et, au-dessus d'une première face du support, une formation d'un empilement comprenant successivement une formation d'une première couche à base d'un métal, et, au contact de la première couche, une formation d'une deuxième couche à base d'un matériau choisi parmi le MoSiₓ et le WSi_{y}.

### BRÈVE DESCRIPTION DES FIGURES

Les buts, objets, ainsi que les caractéristiques et avantages ressortiront mieux de la description détaillée d'un mode de réalisation qui est illustré par les dessins d'accompagnement suivants dans lesquels :
La figure 1 représente un exemple de contexte applicatif de l'invention.
La figure 2A représente un empilement possible.
La figure 2B montre une variation de la figure 2A avec une couche superficielle.
La figure 2C schématise une mise en circuit de l'élément conducteur.
La figure 3 est un graphe d'évolution de la résistivité électrique de l'élément conducteur selon le paramètre x.
La figure 4 est un graphe d'évolution de la résistance électrique totale de l'élément conducteur en fonction de l'épaisseur de la deuxième couche.
La figure 5 est un graphe d'évolution de la résistance électrique totale de l'élément conducteur en fonction de l'épaisseur de la première couche, en Mo.
La figure 6 est un graphe d'évolution de la résistance électrique totale de l'élément conducteur en fonction de l'épaisseur de la première couche, en Cu.
La figure 7 est un graphe d'évolution de la résistance électrique d'une couche d'oxyde de l'élément conducteur dans différentes situations de traitement thermique sous dioxygène.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- le matériau choisi est le MoSix, avec X = 1 ;
- le matériau choisi est le WSiy, de préférence le WSi₂ ou le W₃Si₅ ;
- l'épaisseur de la deuxième couche 22 est inférieure ou égale à 100 nm ;
- le métal est choisi parmi : Cu, Mo, W, Al, Cr, Ni ;
- l'élément électriquement conducteur comprend, au-dessus et au contact d'au moins une partie de la deuxième couche 22, une couche d'oxyde 23 du matériau de la deuxième couche 22 ;
- l'élément électriquement conducteur est un collecteur de batterie.
- le dispositif comprend un premier collecteur 2 de courant formé au moins en partie par l'élément électriquement conducteur, une première électrode 3, une couche active solide 4, une deuxième électrode 6 et un deuxième collecteur 5 de courant ;
- l'élément électriquement conducteur forme au moins en partie une électrode électriquement raccordée à un organe électro-actif ;
- le composant électrique forme au moins en partie une portion de circuit électrique, de préférence une portion d'antenne, une portion d'un élément inductif, une portion d'un élément capacitif.

L'invention concerne également un procédé de fabrication d'un dispositif microélectronique comprenant un élément électriquement conducteur, le procédé comprenant une fourniture d'un support 1 et, au-dessus d'une première face du support 1, une formation d'un empilement comprenant successivement une formation d'une première couche 21 à base d'un métal, et, au contact de la première couche, une formation d'une deuxième couche 22 à base d'un matériau choisi parmi le MoSiₓ et le WSi_{y} dans lequel :
- la formation de la deuxième couche 22 comprend un dépôt par une co-pulvérisation ou une pulvérisation d'un mélange, respectivement, de Mo et de Si ou de W et de Si, sur une face de la première couche 21 ;
- la formation de la deuxième couche 22 comprend un dépôt alterné, sur une face de la première couche 21, d'au moins une sous-couche, respectivement, de Mo ou de W, et d'au moins une sous-couche de Si ;
- la formation de la deuxième couche 22 comprend, après le dépôt, un traitement thermique configuré pour former des molécules de MoSiₓ ou, respectivement, de WSi_{y};
- le traitement thermique est opéré en présence de dioxygène ;
- le procédé est configuré pour fabriquer un dispositif microélectronique de stockage d'énergie électrochimique, comportant une étape de formation d'une électrode, le traitement thermique étant configuré pour produire un recuit de cristallisation de l'électrode ;
- l'électrode est à base de LiCo, le traitement thermique étant configuré pour produire un recuit de cristallisation de l'électrode de sorte à former du LiCoO₂.
- le procédé est configuré pour que la résistance électrique de l'élément électriquement conducteur soit inférieure ou égale à 3 ohms.

Il est précisé que, dans le cadre de la présente invention, le terme « sur » ou « au-dessus » ne signifie pas obligatoirement « au contact de ». Ainsi, par exemple, le dépôt d'une couche sur une autre couche ou sur un support, ne signifie pas obligatoirement que ces deux parties sont directement au contact l'une de l'autre mais cela signifie que l'une recouvre au moins partiellement l'autre en étant, soit directement à son contact, soit en étant séparée d'elle par un film, ou encore une autre couche ou un autre élément. Une couche peut par ailleurs être composée de plusieurs sous-couches d'un même matériau ou de matériaux différents.

Il est précisé que dans le cadre de la présente invention, l'épaisseur d'une couche ou du support se mesure selon une direction perpendiculaire à la surface selon laquelle cette couche ou ce support présente son extension maximale.

Certaines parties du dispositif de l'invention peuvent avoir une fonction électrique. Certaines sont employées pour des propriétés de conduction électrique et on entend par électrode, collecteur ou équivalent, des éléments formés d'au moins un matériau ayant une conductivité électrique suffisante, dans l'application, pour réaliser la fonction souhaitée. À l'inverse, on entend par isolant électrique ou diélectrique un matériau qui, dans l'application, assure une fonction d'isolation électrique.

On entend par une couche ou équivalent « à base » d'un matériau M, un substrat, une couche, un dispositif comprenant ce matériau M uniquement ou ce matériau M et éventuellement d'autres matériaux, par exemple des éléments d'alliage, des impuretés ou des éléments dopants.

Un élément ou une partie de dispositif est dite électro-active lorsqu'elle est configurée pour convertir une force et/ou une déformation en signal électrique, et inversement. Ces conversions peuvent se réaliser grâce à des phénomènes physiques tels que la dilatation, l'électrostriction, l'effet piézoélectrique, le changement d'état ou de phase, l'effet thermoélectrique, l'effet pyroélectrique, etc...

Un exemple non limitatif de l'invention s'applique à un dispositif microélectronique comprenant pour le moins, sur un substrat, un premier collecteur de courant et une première électrode. Au sens de la présente demande, le terme « collecteur » s'entend d'une partie du dispositif ayant pour fonction de raccorder une électrode à un élément extérieur au dispositif, c'est-à-dire situé à l'extérieur de l'empilement de couches du dispositif, généralement encapsulé. Le terme « électrode » s'entend quant à lui d'une partie du dispositif en continuité électrique avec une couche active (en particulier un électrolyte, de préférence solide, pour le cas du stockage électrochimique ou encore une couche piézoélectrique par exemple). Le collecteur de courant est raccordé à son électrode de sorte à établir une continuité électrique entre ces deux parties.

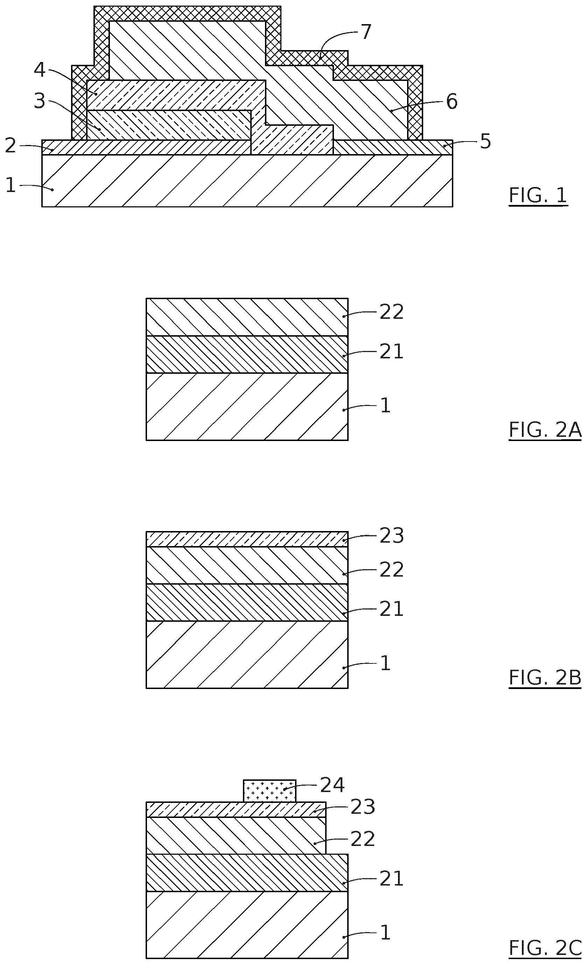

D'une manière générale, un système de stockage de l'invention, dont un exemple est visible en figure 1, peut comprendre un empilement de couches sur un support 1 ; il peut s'agir d'un matériau inorganique, tel que du verre ou du silicium, de préférence recouvert d'une couche de dioxyde de silicium diélectrique.

Cet empilement permet de réaliser les différents composants d'un organe de stockage électrochimique, comprenant un empilement comprenant lui-même :
- un premier collecteur 2,
- une première électrode 3 (généralement la cathode, par exemple en LiCoO₂ ou en un autre matériau nécessitant un traitement thermique, en particulier pour sa cristallisation) ; elle peut être avoir une épaisseur de couche notamment comprise entre 3 µm et 20 µm;
- un électrolyte 4 ; il s'agit de préférence du LiPON. L'électrolyte solide ou matériaux super-ioniques à base de verre sont parmi les meilleurs candidats pour les électrolytes solides inorganiques applicables à toute batterie tout-solide. Il a été développé un grand choix de sulfures et systèmes vitreux d'électrolyte d'oxysulfure, ainsi qu'une série de verre-céramique super-ionique de sulfure Li₂S-P₂S₅, dont la conductivité d'ion de Li⁺ est comparable à celle des électrolytes liquides. En ce qui concerne l'électrolyte pour les batteries au sodium, il existe la même famille de verre, par exemple Na₃PS₄ ;
- une deuxième électrode 6 ;
- et un deuxième collecteur 5.

Globalement, l'enchaînement de ces fabrications de couches peut s'effectuer avec des technologies traditionnelles de la microélectronique. En particulier, l'ensemble des couches ci-dessus peut être déposé par la technologie connue sous l'acronyme PVD (dépôt physique en phase vapeur). Il peut s'agir de dépôt pleine plaque et chaque partie peut être mise en forme par des étapes de photolithographie et gravure conventionnelle. Un traitement thermique de la première électrode 3 peut comprendre un recuit sous atmosphère oxydante à une température supérieure ou égale à 300°C, possiblement supérieure ou égale à 500°C, voire supérieure ou égale à 700°C ; ce traitement est avantageusement configuré pour la cristalliser.

L'électrolyte 4 est une portion intercalée entre les deux portions conductrices séparées et constituées respectivement du premier collecteur 2 et de la première électrode 3, et de la deuxième électrode 6 et du deuxième collecteur 5.

Des échanges ioniques entre ces deux portions conductrices s'opèrent au travers de l'électrolyte 4, avantageusement solide, suivant le principe de stockage d'énergie électrochimique. Une protection contre les agressions extérieures, notamment contre l'oxydation est possible par l'intermédiaire d'un élément d'encapsulation, comme représenté par la couche 7 à la figure 1 ; à titre indicatif, il peut s'agir de nitrure de silicium. Ce dernier recouvre avantageusement l'ensemble du dispositif, hormis les portions de collecteurs qui doivent rester accessibles par l'extérieur pour une reprise de contact. Éventuellement, une protection supplémentaire, par exemple à base de métal, peut-être ensuite déposée.

L'exemple donné en référence à la figure 1 s'inscrit dans le domaine du stockage d'énergie par voie électrochimique, en utilisant un électrolyte avantageusement sous forme de conducteur ionique solide. Néanmoins, d'autres dispositifs microélectroniques sont concernés par la présente invention, en mettant en œuvre des étapes équivalentes pour la fabrication du premier collecteur et de la première électrode, les étapes suivantes pouvant varier suivant l'application. Par exemple, l'invention peut être appliquée à des couches actives de nature électro-active, en particulier piézoélectriques dans des capteurs ou dans des actionneurs notamment. L'électrolyte est donc alors remplacé par une couche piézoélectrique ensuite recouverte de la deuxième électrode et du deuxième collecteur.

Comme indiqué précédemment, la réalisation d'un élément électriquement conducteur comme c'est le cas du premier collecteur 2 fait face à des contraintes significatives, en termes de niveau de conductivité électrique requis et de résistance à l'oxydation, dans l'environnement d'utilisation du dispositif et/ou dans l'environnement de sa fabrication, en particulier lorsque des phases de traitement thermique comprenant l'espèce oxygène sont en jeu.

Est ici proposé un élément électriquement conducteur comportant une pluralité de couches et en particulier un système bicouche dont un exemple est visible sur la face supérieure du support 1 à la figure 2A. La première couche 21 est à base d'au moins un métal. Grâce à la deuxième couche décrite plus loin en détail, le choix du matériau de la première couche 21 peut-être assez large ; il peut s'agir d'une couche à base ou constituée de : cuivre, molybdène, tungstène, aluminium, chrome, nickel. Avantageusement, l'épaisseur de cette couche est supérieure ou égale à 15 nm et/ou inférieure ou égale à 200 nm. Avantageusement, pour favoriser la conductivité électrique, on pourra choisir une épaisseur de couche 21 supérieure ou égale à 100 nm, et de préférence supérieure ou égale à 150 nm ; cela permet d'utiliser une couche 22 d'épaisseur suffisamment élevée pour ne pas rendre la fabrication difficile, épaisseur par exemple supérieure à 50 nm, et de préférence supérieure ou égale à 100 nm. Une telle épaisseur de couche métallique permet aussi, dans l'hypothèse d'une couche de MoSi de 100 nm, d'utiliser tous les métaux courants avec une conductivité électrique satisfaisante.

La deuxième couche 22 est à base de, ou est constituée de, MoSiₓ ou WSi_{y}.

Suivant une possibilité, les couches 21 et 22 sont déposées par PVD, ce qui peut se faire dans le même équipement pour ces deux couches. Ces deux couches sont formées sur la surface supérieure du substrat. On entend par support un élément qui permet de recevoir l'empilement. Des couches intercalaires peuvent être présentes entre la face supérieure du substrat et l'empilement des couches 21,22. Par ailleurs, le dispositif peut comprendre plusieurs substrats ou supports et l'élément électriquement conducteur peut être porté par l'un d'entre eux uniquement.

Les couches 21, 22 se suivent immédiatement de sorte que la face supérieure de la couche 21 est au contact de la face inférieure de la couche 22.

On comprend que la deuxième couche 22 est issue des espèces Mo et Si. La présente invention propose des conditions avantageuses pour réaliser cette couche. Suivant une première possibilité, les espèces Si et Mo sont co-pulvérisées sur le substrat avec la répartition molaire souhaitée ; par exemple, dans le cas d'une pulvérisation cathodique traditionnelle, il suffit de régler les taux de pulvérisation des deux composants. Suivant une autre possibilité, on opère un mélange de Mo et de Si en amont avec la répartition souhaitée et ce mélange est lui-même pulvérisé sur le substrat.

Une autre possibilité est de réaliser des dépôts successifs de couches élémentaires de Mo et de Si, de manière alternée. Au moins une couche de Mo et au moins une couche de Si sont ainsi déposées. Leur épaisseur peut être comprise entre 1 nm et 10 nm ; par exemple, on peut retenir des couches élémentaires d'épaisseur de 2 nm pour le Mo et de 5 nm pour le Si. Avantageusement, on s'arrange pour que l'épaisseur résultante de la couche 22 soit 200 nm.

Dans les deux cas ci-dessus (pulvérisation de mélange/ co pulvérisation et couches élémentaires laminées), on soumet ce dépôt à un traitement thermique, par exemple un traitement thermique sous forme de recuit thermique rapide, à une température inférieure ou égale à 600 °C. Ces modalités de préparation limitent le budget thermique nécessaire à la fabrication de la couche 22.

Par ailleurs, on pourra privilégier la co pulvérisation ou la pulvérisation d'un mélange. En effet, il a été constaté que ce mode de fabrication permettait de limiter la résistivité électrique de la couche 23 potentiellement formée avec un traitement thermique oxydant. Dans le même temps, l'ensemble des dispositions de dépôt indiquées ci-dessus sont satisfaisantes du point de vue des tensions de surface, de sorte à obtenir une accroche suffisante relativement à la couche sous-jacente.

On donne dans le tableau ci-après un exemple d'épaisseur avantageuse pour une couche 21 formée d'un métal, selon le métal dont elle est constituée, pour un premier cas d'une deuxième couche en MoSi de 100 nm d'épaisseur, et un deuxième cas d'une deuxième couche en MoSi de 200 nanomètres d'épaisseur, le tout pour obtenir un niveau de résistivité électrique suffisamment faible pour servir de premier collecteur dans l'exemple donné à la figure 1.

**Tableau**

| Métal¤ | Epaisseur-Min-pour-100-nm-MoSi-(nm)¤ | Epaisseur-Min-pour-200nm-MoSl-(nm)¤ | ¤ |
|---|---|---|---|
| Cu¤ | 20¤ | 15¤ | ¤ |
| Mo¤ | 90¤ | 80¤ | ¤ |
| W¤ | 90¤ | 80¤ | ¤ |
| Al¤ | 26¤ | 23¤ | ¤ |
| Cr¤ | 130¤ | 112¤ | ¤ |
| Ni¤ | 70¤ | 60¤ | ¤ |
| ¤ | | | |

La figure 2B montre que l'élément conducteur peut comprendre une couche additionnelle 23 issue d'une oxydation, en particulier lorsque cet élément est soumis à des conditions extérieures oxydantes lors de la fabrication du reste du dispositif. Il s'agira typiquement d'une couche d'oxyde du matériau de la deuxième couche 22. Dans la pratique, il a été constaté que l'épaisseur de la couche 23, dans les conditions du traitement thermique nécessaires pour la cristallisation de la première électrode (conditions d'oxydation forte par recuit thermique rapide à 600°C pendant 30 minutes, sous flux de dioxygène), reste très faible, ce qui permet de ne pas rendre cette étape trop défavorable à la conductivité électrique finale du premier collecteur. Si l'oxydation était trop importante, la résistance électrique augmenterait rapidement. On notera que le comportement d'oxydation limitée de l'alliage siliciure MoSi (en particulier quand x=1) est remarquable.

Pour vérifier les propriétés électriques de l'élément conducteur ainsi constitué, des essais ont été opérés sur la base d'un montage électrique simple correspondant à l'illustration de la figure 2C : un plot 24 a été rapporté sur la surface de l'élément conducteur et un accès à la première couche 21 a été ouvert. De la sorte, une mesure de conductivité électrique au travers de l'élément, depuis la couche 21 jusqu'au plot 24, a pu être réalisée dans différentes conditions.

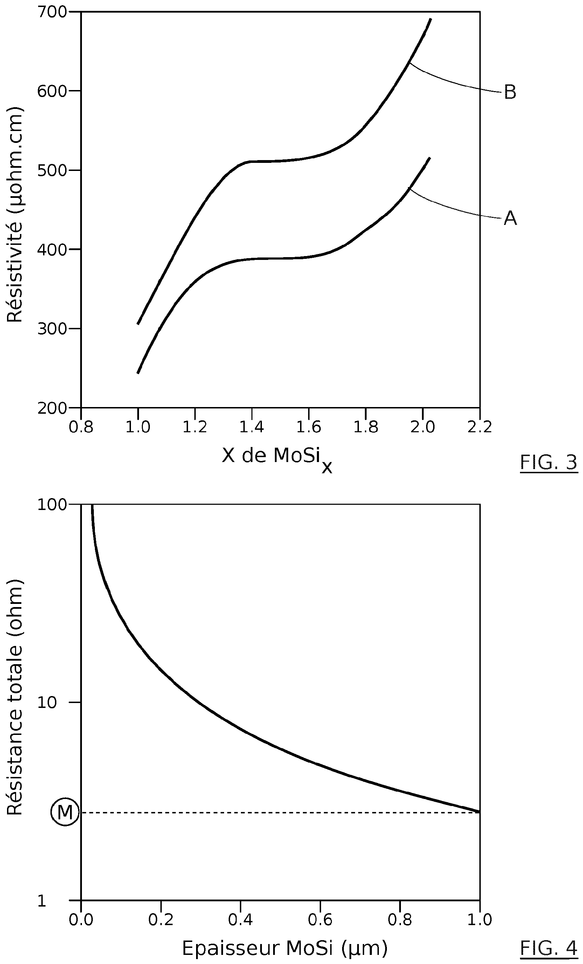

La figure 3 présente un graphe comparant l'évolution de la résistivité électrique, en fonction du paramètre X du MoSiₓ, d'un élément selon la figure 2C obtenue par co pulvérisation (avec recuit à 600°C sous atmosphère oxydante (pendant 30 minutes pour la courbe A, et sans recuit pour la courbe B), avec une épaisseur résultante de couche 22 de 100 nm. Pour isoler les paramètres de résistivité électrique de la couche 22, dans le contexte de la figure 3, la couche 22 a été directement formée sur le substrat, de sorte à mesurer des conditions propres à cette couche, en l'absence de couche 21.

Les deux courbes sont monotones et connaissent une croissance de la résistivité avec l'augmentation de X. Par conséquent, il apparaît que la meilleure répartition molaire en termes de conductivité électrique correspond à X = 1. Ce résultat est surprenant dans la mesure où, dans ces conditions, le matériau apparaît bien cristallisé alors qu'il devient nettement plus amorphe ultérieurement, et en particulier dans le cas ou X = 2 pour lequel le demandeur a constaté qu'il était presque amorphe.

On notera que X n'est pas forcément un entier naturel. Il peut notamment prendre des valeurs décimales telles que celles comprises entre 1 et 2 en figure 3. Il en est de même pour le paramètre Y de WSi_{y}. Par ailleurs des études par diffractométrie de rayons X peuvent servir à déterminer le caractère amorphe ou bien cristallisé du matériau MoSiₓ (qui peut comprendre des phases MoSi₂ et Mo₅Si₃ à l'observation) et du matériau WSi_{y} (notamment WSi₂ et W₃Si₅). Le comportement est similaire pour le WSi_{y} relativement au MoSiₓ, et en particulier le WSi₂ et le W₃Si₅. En effet, ces deux matériaux révèlent une très bonne résistance contre la dégradation à la température sous atmosphère oxydante (par exemple de l'air). Le WSi₂ reste amorphe sur une grande plage de température, puis passe en phase cristalline au-delà de 580°C. Quant au W₃Si₅, il est amorphe jusqu'à 529°C et cristallin au-delà. On peut notamment les utiliser avec des épaisseurs déposées équivalentes à celles données dans l'exemple du MoSiₓ.

Toujours pour caractériser la couche 22 seule, la courbe de la figure 4 présente l'évolution de la résistance de la couche 22 en fonction de son épaisseur, dans les conditions de préparation de la couche 22 indiquées pour la figure 3, en ne retenant que le mode de réalisation dans lequel X = 1 (MoSi). La résistance électrique décroît très rapidement. En fixant une valeur de résistance totale convenable à 3Ω, repérée par la lettre M sur la figure, on note qu'il faudrait une épaisseur très importante de couche 22 seule pour parvenir à un niveau satisfaisant de conductivité.

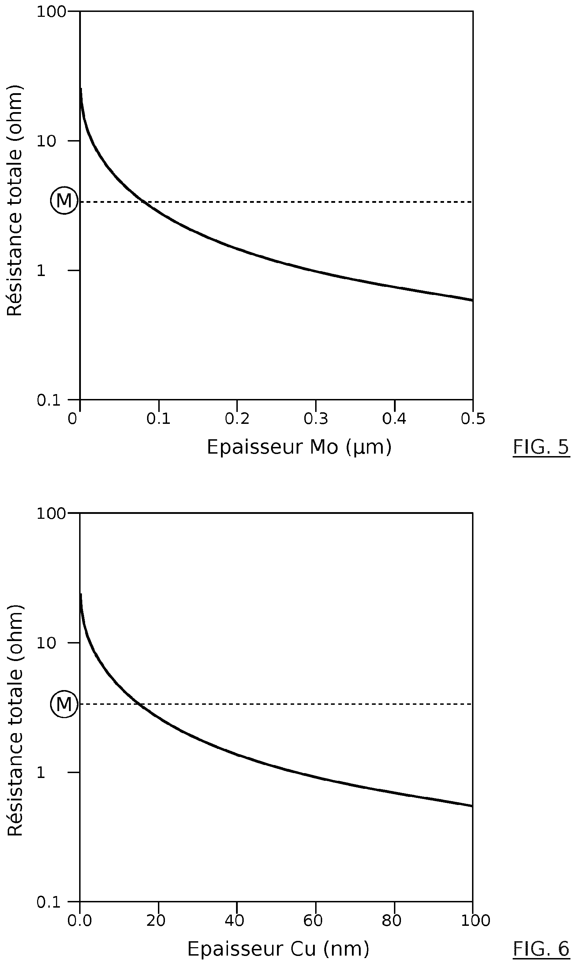

La première couche 21 apporte une solution à cette difficulté grâce à l'invention. Les courbes des figures 5 à 6 montrent en effet des évolutions de résistance totale, c'est-à-dire de l'élément électriquement conducteur complet comprenant la couche 21, la couche 22 et la couche d'oxyde 23, dans les conditions de la figure 2C.

Dans le cas de la figure 5, la première couche est faite de molybdène, avec plusieurs épaisseurs testées. La deuxième couche 22 est faite de MoSi avec une épaisseur de 100 nm. On note immédiatement une chute rapide de la résistance électrique totale, la cible indicative M est atteinte à partir d'une épaisseur de 90 nm, ce qui est très raisonnable.

Dans le cas de la figure 6, la première couche est faite de cuivre, avec plusieurs épaisseurs testées. La deuxième couche 22 est identique à celle utilisée pour le cas de la figure 5. Comme dans ce cas, on note une baisse rapide de la résistance électrique totale. En particulier, la cible indicative M est atteinte à partir d'une épaisseur de 16 nm de cuivre.

Les résultats ci-dessus montrent que la combinaison de la première couche et de la deuxième couche de l'invention assure des niveaux de résistance électrique qui peuvent facilement être adaptés à l'application visée. Notamment, pour la réalisation de collecteurs de dispositif de stockage électrochimique, la cible M indiquée sur les courbes est largement satisfaisante et la réalisation pratique est facile. Par exemple, si on retient une couche 21 de 200 nm de cuivre et une couche 22 de 200 nm de MoSi, la résistance globale obtenue est de 0,55Ω, ce qui laisse une grande marge par rapport aux niveaux de résistance acceptables du domaine.

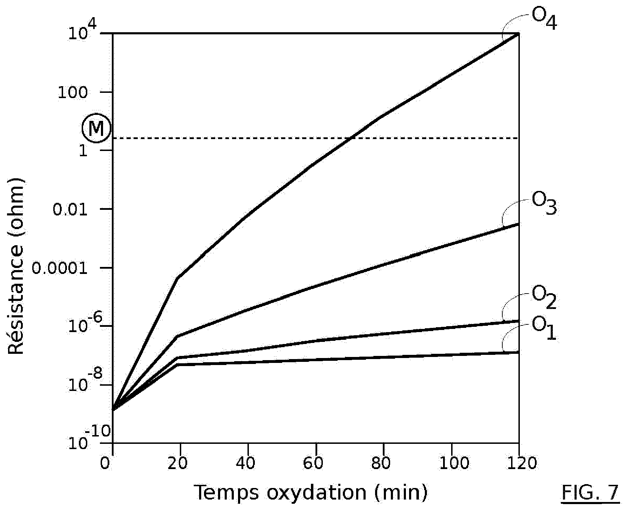

La figure 7 cherche à examiner l'influence d'un traitement thermique oxydant sur les résultats électriques de l'empilement (correspondant au couple de couches 22 et 23) de matériaux proposé dans l'invention. Dans les cas précédents, les mesures avaient été faites avec une condition de traitement thermique sous dioxygène à 600°C pendant 30 minutes. Pour le cas de la figure 7, plusieurs niveaux de température sont testés, avec des temps d'oxydation croissants (correspondant au temps du traitement thermique). La courbe O1 correspond à une température de traitement de 550°C ; la courbe O2 correspond à 600°C ; la courbe O3 correspond à 650°C ; la courbe O4 correspond à 700°C. La cible indicative de résistance M est identique au cas précédent, à 3Ω. La résistance fournie est celle de la couche d'oxyde formée lors du traitement. Une mesure de l'intensité et de la tension permet facilement de déterminer cette résistance.

On note que l'ensemble des résultats est satisfaisant, en ce sens que la résistance électrique connaît une inflexion significative avec la croissance du temps d'oxydation. Ainsi, l'augmentation de cette résistance est mesurée. C'est d'autant plus vrai pour les cas O1, O2 et O3 pour lesquels, la cible indicative M n'est pas atteinte, malgré des temps d'oxydation allant jusqu'à deux heures. Même pour le cas O4, correspondant à une température de 700°C, l'accroissement de résistance mesuré reste bien en dessous de la cible indicative M jusqu'à plus d'une heure de traitement.

D'une manière générale, on confirme que la résistance électrique totale reste tout à fait convenable, au moins jusqu'à un temps d'oxydation inférieur ou égal à une heure. Ensuite, la résistance électrique totale augmente plus significativement. On notera que jusqu'à 20 minutes voire 40 minutes, la durée du traitement thermique n'influe pas ou peu sur la résistance.

En pratique, un traitement thermique d'une durée inférieure ou égale à 60 minutes garantit des conditions de résistance électrique suffisamment faibles, pour respecter la cible indicative M, et ce, quelles que soient les conditions de température, même élevées (700°C). Pour les températures inférieures ou égales à 650°C, le temps de traitement thermique a même peu d'influence sur le résultat ce qui laisse une grande liberté de choix de paramètres de traitement des dispositifs en fabrication.

L'invention n'est pas limitée aux modes de réalisations précédemment décrits et s'étend à tous les modes de réalisation couverts par les revendications.

## Revendications

1. Dispositif microélectronique comprenant un support (1) et un élément électriquement conducteur comprenant en empilement et successivement au-dessus d'une première face du support (1), une première couche (21) à base d'un métal et une deuxième couche (22), au contact de la première couche (21), à base d'un matériau choisi parmi le MoSi et le WSi_{y}.

2. Dispositif selon la revendication précédente, dans lequel le matériau choisi est le MoSi.

3. Dispositif selon l'une quelconque des revendications précédentes, dans lequel l'épaisseur de la deuxième couche (22) est inférieure ou égale à 100 nm.

4. Dispositif selon l'une quelconque des revendications précédentes, dans lequel le métal est choisi parmi : Cu, Mo, W, Al, Cr, Ni.

5. Dispositif selon l'une quelconque des revendications précédentes, dans lequel l'élément électriquement conducteur comprend, au-dessus et au contact d'au moins une partie de la deuxième couche (22), une couche d'oxyde (23) du matériau de la deuxième couche (22).

6. Dispositif selon l'une quelconque des revendications précédentes, dans lequel l'élément électriquement conducteur est un collecteur de batterie.

7. Dispositif selon la revendication précédente, comprenant un premier collecteur (2) de courant formé au moins en partie par l'élément électriquement conducteur, une première électrode (3), une couche active solide (4), une deuxième électrode (6) et un deuxième collecteur (5) de courant.

8. Dispositif selon l'une quelconque des revendications 1 à 5, dans lequel l'élément électriquement conducteur forme au moins en partie une électrode électriquement raccordée à un organe électro-actif, configurée pour convertir une force et/ou une déformation en signal électrique, et inversement.

9. Procédé de fabrication d'un dispositif microélectronique comprenant un élément électriquement conducteur, le procédé comprenant une fourniture d'un support (1) et, au-dessus d'une première face du support (1), une formation d'un empilement comprenant successivement une formation d'une première couche (21) à base d'un métal, et, au contact de la première couche, une formation d'une deuxième couche (22) à base d'un matériau choisi parmi le MoSi et le WSi_{y}.

10. Procédé selon la revendication précédente, dans lequel la formation de la deuxième couche (22) comprend un dépôt par une co-pulvérisation ou une pulvérisation d'un mélange, respectivement, de Mo et de Si ou de W et de Si, sur une face de la première couche (21).

11. Procédé selon la revendication 10, dans lequel la formation de la deuxième couche (22) comprend un dépôt alterné, sur une face de la première couche (21), d'au moins une sous-couche, respectivement, de Mo ou de W, et d'au moins une sous-couche de Si.

12. Procédé selon l'une quelconque des revendications 10 ou 11, dans lequel la formation de la deuxième couche (22) comprend, après le dépôt, un traitement thermique configuré pour former des molécules de MoSi ou, respectivement, de WSi_{y}.

13. Procédé selon la revendication précédente, dans lequel le traitement thermique est opéré en présence de dioxygène.

14. Procédé selon l'une quelconque des deux revendications précédentes, configuré pour fabriquer un dispositif microélectronique de stockage d'énergie électrochimique, comportant une étape de formation d'une électrode, le traitement thermique étant configuré pour produire un recuit de cristallisation de l'électrode.

15. Procédé selon la revendication précédente, dans lequel l'électrode est à base de LiCo, le traitement thermique étant configuré pour produire un recuit de cristallisation de l'électrode de sorte à former du LiCoO₂.
